# EUROPÄISCHE PATENTSCHRIFT

(11) **EP 2 695 767 B1**
(45) Veröffentlichungstag und Bekanntmachung des Hinweises auf die Patenterteilung: **12.09.2018**
(21) Anmeldenummer: 13176363.3
(22) Anmeldetag: 12.07.2013
(51) Int. Cl.: B60L 11/18, H01M 2/10, H01M 2/20, H01M 2/30, H01M 2/34, H01M 10/42, H01M 10/052

(54) **BATTERIESYSTEM MIT EINER AUSGANGSSPANNUNG VON MEHR ALS 60 V GLEICHSPANNUNG UND KRAFTFAHRZEUG**
BATTERY SYSTEM WITH AN OUTPUT VOLTAGE OF MORE THAN 60 V DIRECT CURRENT, AND MOTOR VEHICLE
SYSTÈME DE BATTERIE DOTÉ D'UNE TENSION DE SORTIE DE PLUS DE 60 V EN TENSION CONTINUE ET VÉHICULE AUTOMOBILE

(30) Priorität: 06.08.2012 DE 102012213862
(43) Veröffentlichungstag der Anmeldung: 12.02.2014
(73) Patentinhaber: Robert Bosch GmbH, 70469 Stuttgart (DE); Samsung SDI Co., Ltd., Yongin-si Gyeonggi-do 446-577 (KR)
(72) Erfinder: Haug, Karsten, 70372 Stuttgart (DE)
(74) Vertreter: Bee, Joachim

(56) Entgegenhaltungen:
- EP-A1- 1 306 927
- EP-A2- 2 423 026
- DE-A1-102009 001 514
- DE-A1-102009 035 470
- DE-U1-202006 019 971
- JP-A- 2008 080 878
- US-A1- 2007 216 226

## Beschreibung

Die vorliegende Erfindung betrifft ein Batteriesystem mit einer Ausgangsspannung von mehr als 60 V Gleichspannung und ein mit dem Batteriesystem ausgestattetes Kraftfahrzeug.
Bei abgenommenem Deckel vom Batteriegehäuse des Batteriesystems, bestehend aus mindestens zwei in Reihe geschalteten Spannungsquellen mit jeweils weniger als 60 V Gleichspannung, sind die beiden Kontakte der wenigstens zwei Spannungsquellen von Isolationselementen umgeben, sodass ein unbeabsichtigtes Kurzschließen der reversibel getrennten Spannungsquellen über freiliegende Kontakte verhindert wird. Dadurch entfallen besondere Sicherheitsvorkehrungen beim Arbeiten an einer zu wartenden Spannungsquelle des Batteriesystems und der Servicetechniker ist vor elektrischem Schlag geschützt.

### Stand der Technik

Aus der DE 10 2009 001 514 A1 ist ein Batteriesystem, bestehend aus mindestens zwei Spannungsquellen mit jeweils weniger als 60 V Gleichspannung bekannt, wobei diese in Reihe geschaltet und neben oder übereinander angeordnet, für das Batteriesystem eine Ausgangsspannung von insgesamt mehr als 60 V Gleichspannung ergeben. Es sind nach Öffnung des Batteriegehäuses die mindestens zwei Spannungsquellen voneinander reversibel trennbar und es erfolgt auch eine Unterbrechung hin zum Verbraucher, enthaltend ein solches Batteriesystem.
Damit ist allerdings die Gefahr des Kurzschließens nebeneinanderliegender, wenn auch vorübergehend voneinander getrennter, im Batteriesystem enthaltener Spannungsquellen nicht gebannt, wenn unbeabsichtigt Gegenstände oder Werkzeuge auf zumindest einen der freiliegenden Kontakte einer Spannungsquelle, nach vorheriger Deckelöffnung, mit diesem in Berührung kommen.

Diesbezüglich ist aus der DE 102009035470 A1 ein Batteriesystem bekannt, bei dem zur Vermeidung von Kurzschlüssen hohlzylinderförmige Isolationselemente vorgesehen sind. Weiterhin sind aus der US 2007/216226 A1 Batteriesysteme mit Spannungsquellen < 60 V beschrieben, welche durch Steckverbindungen getrennt werden können.

### Offenbarung der Erfindung

Erfindungsgemäß wird ein Batteriesystem mit einer Ausgangsspannung von mehr als 60 V Gleichspannung vorgeschlagen, umfassend:
- mindestens zwei Spannungsquellen mit einer Ausgangsspannung von jeweils weniger als 60 V, die jeweils mindestens einen Kontakt aufweisen, über den die Spannungsquellen durch reversibel unterbrechbare, leitende Verbindungen in Reihe schaltbar sind ;
- ein Batteriegehäuse in dem die mindestens zwei Spannungsquellen angeordnet sind ; und
- mindestens eine reversibel unterbrechbare, leitende Verbindung, die derart funktional ausgestaltet ist, dass durch die leitende Verbindung bei geschlossenem Batteriegehäuse eine Reihenschaltung der mindestens zwei Spannungsquellen herstellbar ist und bei Öffnung des Batteriegehäuses eine Reihenschaltung der mindestens zwei Spannungsquellen reversibel unterbrochen wird;
wobei das Batteriegehäuse mindestens zweiteilig aufgebaut ist und einen öffnenbaren Deckel aufweist, wobei mindestens eine der reversibel unterbrechbaren, leitenden Verbindungen derart mit dem Deckel verbunden ist, dass bei Öffnung des Deckels die Reihenschaltung der mindestens zwei Spannungsquellen durch die mindestens eine reversibel unterbrechbare, leitende Verbindung reversibel unterbrechbar ist, dadurch gekennzeichnet, dass Isolationselemente als bewegliche Hohlzylinder ausgestaltet sind, die den jeweiligen Kontakt umgeben, wobei der bewegliche Hohlzylinder derart ausgebildet ist, dass bei geöffnetem Batteriegehäuse mindestens die seitlichen Flächen des jeweiligen Kontaktes vollständig vom Hohlzylinder umgeben sind. Damit gelingt es vorteilhafterweise, dass bei einem Batteriesystem, bestehend aus zwei und mehr miteinander in Reihe geschalteten und nebeneinander oder in einer weiteren Ebene übereinander angeordneten Spannungsquellen die Handhabung des Deckels eines Batteriegehäuses nicht unnötig erschwert wird und dennoch eine zuverlässige Isolation der Kontakte der voneinander reversibel trennbaren Spannungsquellen erfolgt.

Die Ausbildung des Batteriegehäuses des Batteriesystems weist dabei einen Deckel mit einem Randbereich auf, der derart ausgestaltet ist, dass bei Öffnung des Deckels das Innere des Batteriegehäuses erst von außen zugänglich wird, wenn die Reihenschaltung der mindestens zwei Spannungsquellen durch die mindestens eine reversibel unterbrechbare, leitende Verbindung reversibel unterbrochen vorliegt.

Das bedeutet, dass vorteilhafterweise keine Spaltbildung zwischen Deckel und dem übrigen Batteriegehäuse vorhanden ist, bevor die zumindest zwei Spannungsquellen elektrisch voneinander getrennt sind und es dadurch zu keinem Durchgriff unter den Deckel mit Werkzeugen kommen kann oder mit den Händen des Servicetechnikers Berührungen mit spannungsführenden Teilen des Batteriesystems passieren können.

Das Batteriesystem besitzt mindestens eine reversibel unterbrechbare, leitende Verbindung als Steck-, Press- oder Schraubverbindung.

Es enthält mindestens eine Spannungsquelle, welche Lithium-Ionen-Batteriezellen umfasst.

In dem vorgeschlagenen Batteriesystem ist im Hinblick auf den Schutz der jeweiligen Kontakte der Spannungsquellen vorgesehen, dass sie von Isolationselementen umgeben sind, die als Hohlzylinder vorliegen.

Sie bilden insofern eine nichtleitende Schutzhülle, die zumindest einen der nach Öffnung des Deckels des Batteriegehäuses sonst zugänglichen Kontakte zwischen den zumindest zwei oder mehreren Spannungsquellen abdeckt.

Die Ausführung der Isolationselemente als Hohlzylinder wird einerseits in der Weise vorgenommen, indem sie als feststehende Hohlzylinder ausgebildet sind, die den jeweiligen Kontakt umgeben, wobei der feststehende Hohlzylinder derart ausgebildet ist, dass mindestens die seitlichen Flächen des jeweiligen Kontaktes vollständig vom Hohlzylinder umgeben sind.

Dadurch ist vorteilhaft gesichert, dass nach Deckelöffnung des Batteriegehäuses, bei z.B. Demontagearbeiten einer Spannungsquelle, aus zumindest aus zwei Spannungsquellen bestehenden Batteriesystems, keine unbeabsichtigte Kollision ungeschützter Kontakte stattfindet.

Andererseits werden erfindungsgemäß die Isolationselemente als Hohlzylinder derart vorgeschlagen, wobei sie als bewegliche Hohlzylinder ausgestaltet sind, die den jeweiligen Kontakt umgeben, wobei der bewegliche Hohlzylinder so ausgebildet ist, dass bei geöffnetem Batteriegehäuse mindestens die seitlichen Flächen des jeweiligen Kontaktes vollständig vom Hohlzylinder umgeben sind.

Die Beweglichkeit der als Hohlzylinder ausgebildeten Isolationselemente tritt dabei zwangsläufig nach der Deckelöffnung des Batteriegehäuses ein, und zwar vorteilhafterweise translatorisch in Längsrichtung entlang der Symmetrieachse des jeweiligen Kontaktes.

Die Bewegung eines Hohlzylinders am Umfang des unterbrechbaren Kontaktes zwischen mindestens zwei Spannungsquellen in einem Batteriesystem wird initiiert, indem der bewegliche Hohlzylinder derart ausgebildet ist, dass der bewegliche Hohlzylinder bei geöffnetem Batteriegehäuse mittels Federkraft ausfahrbar ist.

Das stellt eine wesentliche Sicherheitsmaßnahme dar, denn sie wirkt unabhängig und ohne zusätzlich erforderliche Handlungen des Servicetechnikers zu dessen eigener Sicherheit.

In einer denkbaren Variante der per Federkraft ausfahrbaren Hohlzylinder kann vorgesehen werden, dass die Isolationselemente zwei konzentrische Hohlzylinder umfassen, wobei der innere Hohlzylinder mittels Federkraft ausfahrbar ist.

Das bedeutet, dass im Sinne einer Teleskopierbarkeit der Isolationselemente bei Deckelöffnung der für die Kontaktherstellung zwischen zumindest zwei Spannungsquellen relevante Bereich eines jeweiligen Kontaktes mit einem feststehenden und einem beweglichen Teil eines Hohlzylinders umschlossen ist, wobei der Weg des beweglichen Teils eines derartigen Isolationselementes deutlich kürzer gestaltbar ist, was sich letztlich auch dahingehend positiv auswirkt, als dadurch die Randgestaltung des Deckels des Batteriegehäuses weniger tiefgezogen sein muss.

Das erfindungsgemäß gestaltete Batteriesystem ist vorteilhaft in einem Kraftfahrzeug einsetzbar, wobei das Batteriesystem mit einem Antriebssystem desselben, insbesondere wenn es sich um ein Elektro- oder um ein Hybridfahrzeug handelt, verbunden ist.

### Zeichnungen

Ausführungsbeispiele der Erfindung werden anhand der Zeichnungen und der nachfolgenden Beschreibung näher erläutert. Es zeigen:
Figur 1 ein Batteriesystem mit 3 in Reihe geschalteten Spannungsquellen in schematischer Zusammenstellung,
Figur 2 Abdeckung eines Kontaktes mit seitlich feststehendem Isolationselement und aufgelegtem Deckel auf ein Batteriegehäuse,
Figur 3 wie Figur 2, jedoch mit abgenommenem Deckel,
Figur 4 Abdeckung eines Kontaktes mit seitlich beweglichem Isolationselement und aufgelegtem Deckel,
Figur 5 wie Figur 4, jedoch mit abgenommenem Deckel und zusätzlich mit innerem teleskopierbaren Hohlzylinder eines Isolationselementes.

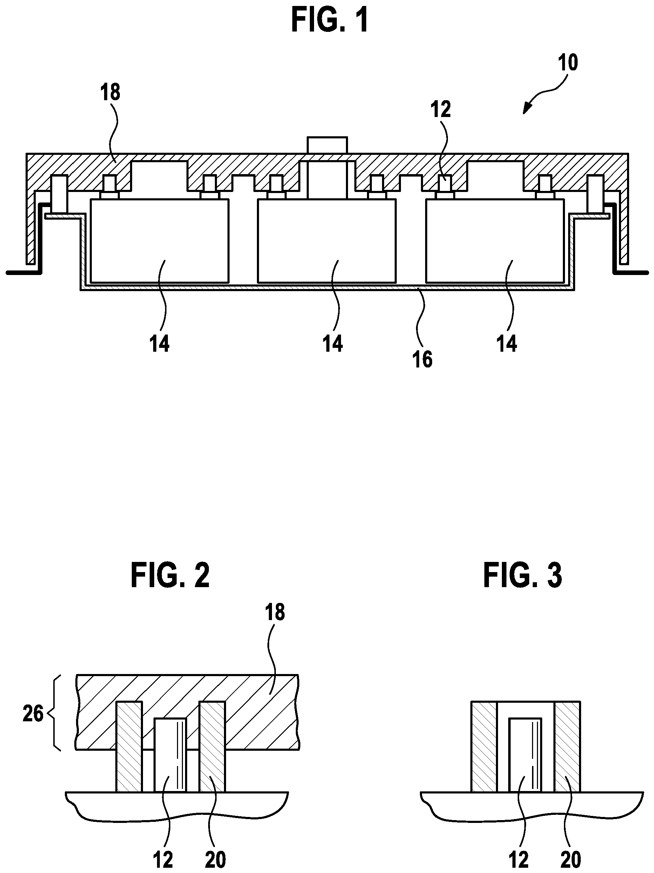

In der Figur 1 wird eine Anordnung eines Batteriesystems 10, bestehend aus 3 Spannungsquellen 14 gezeigt, bei der ein Deckel 18 mit einem das Batteriegehäuse 16 des Batteriesystems 10 derart umgreifenden Randbereich 26 ausgebildet ist, dass die Kontakte 12 nicht frei zugänglich sind, sondern erst bei Unterbrechung der Reihenschaltung zwischen den Spannungsquellen14 mittels eines funktionalen Zusammenhanges nach der Öffnung des Deckels 18 des Batteriegehäuses 16 erreichbar sind.

Die Kontakte 12 einer jeden Spannungsquelle 14 besitzen dabei zumindest eine seitliche Abdeckung, die durch feststehende oder bewegliche Isolationselemente 20, 22 ausgebildet ist, sodass ein Kurzschließen oder Zusammenschalten der reversibel getrennten Spannungsquellen 14 während durchzuführender Wartungsarbeiten ausgeschlossen ist.

In den Figuren 2 und 3 ist ein durch den Deckel 18 des Batteriegehäuses 16 abgedeckter Kontakt 12 und eine entsprechende Darstellung bei entferntem Deckel dargestellt. Es ist deutlich zu erkennen, dass das hier als feststehend ausgebildete Isolationselement 20 den Kontakt 12 seitlich abdeckt und zweckmäßigerweise auch soweit überragt, dass versehentlich abgelegte metallische Gegenstände oder Werkzeuge nicht mit dem Kontakt 12 in Berührung gelangen können.

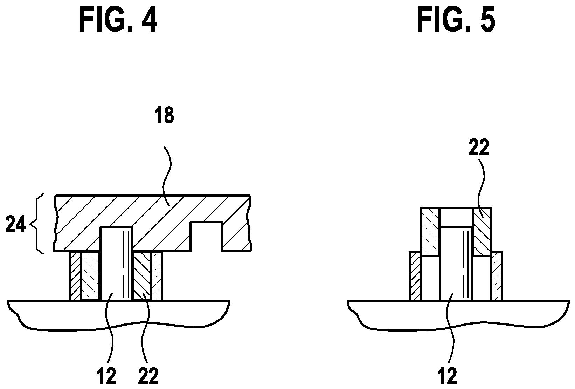

In ähnlicher Ausbildung kann ein Isolationselement 22 gemäß der Figuren 4 und 5 vorgeschlagen werden, wenn die seitlich den Kontakt 12 umgebenden Hohlzylinder durch Federkraft aus einer Ruhelage, bei geschlossenem Batteriegehäuse 16 in eine ausgefahrene Endlage, bei geöffnetem Deckel 18 beweglich gestaltet sind.

In einer die Beweglichkeit der Isolationselemente 22 weiter untersetzenden Variante kann gemäß der Darstellung in Figur 5 von einer teleskopartigen Verschiebbarkeit der ausfahrbaren Isolationselemente 22 gesprochen werden.

## Patentansprüche

1. Batteriesystem (10) mit einer Ausgangsspannung von mehr als 60V Gleichspannung, umfassend:
- mindestens zwei Spannungsquellen (14) mit einer Ausgangsspannung von jeweils weniger als 60V, die jeweils mindestens einen Kontakt (12) aufweisen, über den die Spannungsquellen (14) durch reversibel unterbrechbare, leitende Verbindungen in Reihe schaltbar sind;
- ein Batteriegehäuse (16), in dem die mindestens zwei Spannungsquellen (14) angeordnet sind; und
- mindestens eine reversibel unterbrechbare, leitende Verbindung, die derart funktional ausgestaltet ist, dass durch die leitende Verbindung bei geschlossenem Batteriegehäuse (16) eine Reihenschaltung der mindestens zwei Spannungsquellen (14) herstellbar ist und bei Öffnung des Batteriegehäuses (16) eine Reihenschaltung der mindestens zwei Spannungsquellen (14) reversibel unterbrochen wird, wobei das Batteriegehäuse (16) mindestens zweiteilig aufgebaut ist und einen öffenbaren Deckel (18) aufweist, wobei mindestens eine der reversibel unterbrechbaren, leitenden Verbindungen derart mit dem Deckel (18) verbunden ist, dass bei Öffnung des Deckels (18) die Reihenschaltung der mindestens zwei Spannungsquellen (14) durch die mindestens eine reversibel unterbrechbare, leitende Verbindung reversibel unterbrechbar ist, **dadurch gekennzeichnet, dass** Isolationselemente (22) als bewegliche Hohlzylinder ausgestaltet sind, die den jeweiligen Kontakt (12) umgeben, wobei der bewegliche Hohlzylinder derart ausgebildet ist, dass bei geöffnetem Batteriegehäuse (16) mindestens die seitlichen Flächen des jeweiligen Kontaktes (12) vollständig vom Hohlzylinder umgeben sind.

2. Batteriesystem (10) nach Anspruch 1, wobei die mindestens eine reversibel unterbrechbare, leitende Verbindung als Steck-, Press- oder Schraubverbindung ausgebildet ist.

3. Batteriesystem (10) nach einem der vorhergehenden Ansprüche, wobei mindestens eine der Spannungsquellen (14) Lithium-Ionen-Batteriezellen umfasst.

4. Batteriesystem (10) nach einem der Ansprüche 1 bis 3, wobei der bewegliche Hohlzylinder derart ausgebildet ist, dass der bewegliche Hohlzylinder bei geöffnetem Batteriegehäuse (16) mittels Federkraft ausfahrbar ist.

5. Batteriesystem (10) nach Anspruch 4, wobei die Isolationselemente (22) zwei konzentrische Hohlzylinder umfassen, wobei der innere Hohlzylinder mittels Federkraft ausfahrbar ist.

6. Kraftfahrzeug enthaltend ein Batteriesystem (10) nach einem der Ansprüche 1 bis 5.

## Claims

1. Battery system (10) with an output voltage of more than 60 V DC, comprising:
- at least two voltage sources (14) with an output voltage of in each case less than 60 V, which at least two voltage sources each have at least one contact (12) by means of which the voltage sources (14) can be connected in series by reversibly interruptible, conductive connections;
- a battery housing (16) in which the at least two voltage sources (14) are arranged; and
- at least one reversibly interruptible, conductive connection which is functionally configured in such a way that a series connection of the at least two voltage sources (14) can be established by the conductive connection when the battery housing (16) is closed and a series connection of the at least two voltage sources (14) is reversibly interrupted when the battery housing (16) is opened, wherein the battery housing (16) is of at least two-part construction and has an openable cover (18), wherein at least one of the reversibly interruptible, conductive connections is connected to the cover (18) in such a way that, when the cover (18) is opened, the series connection of the at least two voltage sources (14) can be reversibly interrupted by the at least one reversibly interruptible, conductive connection, **characterized in that** insulation elements (22) are configured as moving hollow cylinders which surround the respective contact (12), wherein the moving hollow cylinder is designed in such a way that at least the side faces of the respective contact (12) are completely surrounded by the hollow cylinder when the battery housing (16) is open.

2. Battery system (10) according to Claim 1, wherein the at least one reversibly interruptible, conductive connection is in the form of a plug-in, press or screw connection.

3. Battery system (10) according to either of the preceding claims, wherein at least one of the voltage sources (14) comprises lithium-ion battery cells.

4. Battery system (10) according to one of Claims 1 to 3, wherein the moving hollow cylinder is designed in such a way that the moving hollow cylinder can be extended by means of spring force when the battery housing (16) is open.

5. Battery system (10) according to Claim 4, wherein the insulation elements (22) comprise two concentric hollow cylinders, wherein the inner hollow cylinder can be extended by means of spring force.

6. Motor vehicle containing a battery system (10) according to one of Claims 1 to 5.

## Revendications

1. Système de batterie (10) ayant une tension de sortie supérieure à 60 V en tension continue, comprenant :
- au moins deux sources de tension (14) ayant une tension de sortie respectivement inférieure à 60 V, lesquelles possèdent respectivement au moins un contact (12) par le biais duquel les sources de tension (14) peuvent être branchées en série par des liaisons conductrices interruptibles de manière réversible ;
- un boîtier de batterie (16) dans lequel sont disposées les au moins deux sources de tension (14) ; et
- au moins une liaison conductrice interruptible de manière réversible qui est configurée fonctionnellement de telle sorte que la liaison conductrice, lorsque le boîtier de batterie (16) est fermé, permet d'établir un branchement en série des au moins deux sources de tension (14) et, lors de l'ouverture du boîtier de batterie (16), un branchement en série des au moins deux sources de tension (14) est interrompu de manière réversible, le boîtier de batterie (16) étant constitué au moins en deux parties et possédant un couvercle (18) qui peut être ouvert, au moins l'une des liaisons conductrices interruptibles de manière réversible étant reliée au couvercle (18) de telle sorte que lors de l'ouverture du couvercle (18), le branchement en série des au moins deux sources de tension (14) peut être interrompu de manière réversible par l'au moins une liaison conductrice interruptible de manière réversible, **caractérisé en ce que** des éléments d'isolation (22) sont réalisés sous la forme de cylindres creux mobiles qui entourent le contact (12) respectif, le cylindre creux mobile étant configuré de telle sorte que lorsque le boîtier de batterie (16) est ouvert, au moins les surfaces latérales du contact (12) respectif sont entièrement entourées par le cylindre creux.

2. Système de batterie (10) selon la revendication 1, l'au moins une liaison conductrice interruptible de manière réversible étant réalisée sous la forme d'une liaison à enfichage, à pressage ou à vissage.

3. Système de batterie (10) selon l'une des revendications précédentes, au moins l'une des sources de tension (14) comportant des cellules de batterie aux ions de lithium.

4. Système de batterie (10) selon l'une des revendications 1 à 3, le cylindre creux mobile étant configuré de telle sorte que le cylindre creux mobile peut être sorti au moyen de la force d'un ressort lorsque le boîtier de batterie (16) est ouvert.

5. Système de batterie (10) selon la revendication 4, les éléments d'isolation (22) comprenant deux cylindres creux concentriques, les cylindres creux intérieurs pouvant être sortis au moyen de la force d'un ressort.

6. Véhicule automobile contenant un système de batterie (10) selon l'une des revendications 1 à 5.
